(19) Europäisches Patentamt
European Patent Office
Office européen des brevets

(11) EP 2 956 517 B1

(12) **EUROPEAN PATENT SPECIFICATION**

(45) Date of publication and mention of the grant of the patent:
**08.12.2021 Bulletin 2021/49**

(21) Application number: **14708402.4**

(22) Date of filing: **18.02.2014**

(51) Int Cl.:
***C09J 7/38*** *(2018.01)* ***C09J 7/22*** *(2018.01)*
***B41N 6/02*** *(2006.01)* ***C09J 133/08*** *(2006.01)*

(86) International application number:
**PCT/US2014/016815**

(87) International publication number:
**WO 2014/127341 (21.08.2014 Gazette 2014/34)**

(54) **PRESSURE SENSITIVE ADHESIVE TAPE AND ARTICLES MADE THEREFROM**

DRUCKEMPFINDLICHES KLEBEBAND UND DARAUS HERGESTELLTE ARTIKEL

RUBAN ADHÉSIF SENSIBLE À LA PRESSION ET ARTICLES FABRIQUÉS AVEC CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2013 US 201361765943 P**
**04.03.2013 US 201361772274 P**

(43) Date of publication of application:
**23.12.2015 Bulletin 2015/52**

(73) Proprietor: **3M Innovative Properties Company**
**St. Paul, MN 55133-3427 (US)**

(72) Inventors:
- **VAN WERT, Scott A.**
  **Saint Paul, Minnesota 55133-3427 (US)**
- **SOKALSKI, John S.**
  **Saint Paul, Minnesota 55133-3427 (US)**

(74) Representative: **Vossius & Partner**
**Patentanwälte Rechtsanwälte mbB**
**Siebertstrasse 3**
**81675 München (DE)**

(56) References cited:
**US-A- 5 905 099 US-A1- 2008 044 611**

- **ALDRICH CORP GENERAL CATALOGUE: "Reference : Polymer Properties", INTERNET CITATION, 1 January 2011 (2011-01-01), pages 52-53, XP002660382, Retrieved from the Internet: URL:http://www.sigmaaldrich.com/etc/medialib/docs/Aldrich/General_Information/thermal_transitions_of_homopolymers.Par.0001.File.tmp/thermal_transitions_of_homopolymers.pdf [retrieved on 2011-09-30]**
- **SIGMA ALDRICH: "Reference: polymer properties", INTERNET CITATION, 1 January 1999 (1999-01-01), pages 46-49, XP002608011, Retrieved from the Internet: URL:http://www.sigmaaldrich.com/etc/medialib/docs/Aldrich/General_Information/polymer_solutions.Par.0001.File.tmp/polymer_solutions.pdf [retrieved on 2010-11-03]**
- **Anonymous: "MODULATED DSC COMPENDIUM Basic Theory & Experimental Considerations", , 12 May 1997 (1997-05-12), pages 1-32, XP055617432, Retrieved from the Internet: URL:http://www.tainstruments.com/pdf/literature/TA210.pdf [retrieved on 2019-09-02]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 956 517 B1

## Description

### FIELD

The present disclosure relates to pressure sensitive adhesive (PSA) tapes used in flexographic printing applications. The present disclosure also relates to tools made using these PSA tapes and the methods for mounting and demounting printing plates using these PSA tapes and/or tools.

### BACKGROUND

Pressure sensitive adhesives are useful in a variety of applications. In some cases, pressure sensitive adhesives are useful in double sided pressure sensitive adhesive tape constructions for use in the print industry. Flexographic printing is one example of such a case.

Pressure-sensitive adhesives (PSAs) contemplated for use in flexographic printing applications include, for example, those based on natural rubber, as documented by EP 760 389 A, for instance. For the stated end utility, however, pressure-sensitive adhesive tapes are also used that comprise polyacrylate-based PSAs. For example, WO 03/057497 A describes a block copolymer-based acrylate PSA for the stated end application.

PSAs with improved heat-activatable adhesion of retroreflective sheeting to substrates that include aluminum, glass, polyvinyl chloride (PVC), polymethyl methacrylate (PMMA), and stainless steel are known, such as in US 5,905,099 (Everaerts et al). These types of PSAs have high transparency both initially and upon aging; appropriate initial room temperature tack to position the sheeting, high adhesion to aluminum, stainless steel, and other sheeting substrates; low activation temperature (not more than about 70 °C); do not decrease the retroreflective brightness of retroreflective sheeting; and exhibit excellent cohesive strength to hold the sheeting on curved substrates. These PSAs are not disclosed for use in printing applications or applications involving clean and easy removability. These PSAs are also not disclosed for use in tapes with low strength foam substrates.

Poly(meth)acrylate-based pressure-sensitive adhesives using copolymers with isobornyl acrylate, such as those disclosed in US 2006/0057366 A1 (Husemann et al), exhibit a uniform bond strength when measured against stainless steel over a wide peel-rate range and after bonding for 4 days at room temperature. These types of PSAs can be removed without leaving adhesive residue and without destruction from the substrate. Because of this, adhesive tapes made using these types of PSAs can be bonded, detached and rebonded to a variety of substrates.

PSA tapes made of a flat support and a PSA formed from a mixture of acrylic acid esters and/or methyl acrylic acid esters or free acids are disclosed, for example, in US 2008/0044611 A1 (Husemann et al). These PSA tapes are disclosed as being useful as double-sided pressure-sensitive adhesive tapes for mounting printing plates, where the side of the tape facing the printing plate is covered with the described PSA. These tapes exhibit multiple reusability (repositionability), reversibility on different surfaces, slow peel increase even on polar surfaces, and minimized edge lifting after bonding on printing cylinders. These PSA tapes are not used with low density foam backings for clean removability from ink residue coatings. Rather, the disclosed PSA tapes are used with high density foam backings, where these foam tape constructions still do not provide adequate plate edge lifting resistance, which is important in flexographic printing applications.

Other PSAs useful in flexographic plate mounting tapes, such as for example those disclosed in US 2011/0166311 A1 (Ellringmann et al), are disclosed having an acrylic acid fraction of at least 8% by weight. These PSAs also have a defined ratio of copolymerized linear acrylic esters (e.g., butyl acrylate) to branched (e.g., 2-ethylhexyl acrylate), non-cyclic acrylic esters. Optionally, the PSA polymer contains up to 10% by weight of monomers containing C=C double bonds, such as isobornyl acrylate.

None of the PSAs previously disclosed have been used in double coated low strength foam backed printing plate mounting tapes for applications where the plates are contaminated with printing ink binder residues while providing superior plate edge lifting resistance on either new or ink residue contaminated plates while allowing operators to easily reposition plates during mounting.

### SUMMARY

There exists a need for a pressure sensitive adhesive that can be used in adhesive tape applications for flexographic print applications. There exists a need for adhesive tapes that have adequate plate edge lifting resistance. There also exists a need for adhesive tapes that provide sufficient adhesion to both clean and ink extender coated photopolymer plates. There exists a need for adhesive tapes that provide particular plate touch down resistance useful in flexographic plate mounting. There exists a need for adhesive tapes that provide particular gel swells useful in flexographic print applications. There also exists a need for a tool made using these types of adhesive tapes for use in flexographic print applications and a method for using such adhesive tapes in flexographic printing.

The adhesive tapes in the present disclosure provide improved removability and damage free recovery of the printing plates that have undergone plate cleaning operations after prolonged use on press and/or after extended storage of the mounted plates.

The present invention is as defined in the appended claims.

The substrate comprises a foam layer. Exemplary foam layer densities include densities of 0.32 g/cm$^3$ (20 lbs/ft$^3$) or less.

In some embodiments, at least one of the adhesive layers having the polymer component has a peel force from new plate of greater than or equal to 0.055 Newtons per cm.

In some embodiments, at least one of the adhesive layers having the polymer component has a lifting resistance of less than or equal to 3.0 mm/48 hours. In some embodiments, at least one of the adhesive layers having the polymer component has a plate touch down resistance of between 0.2 and 8.0 Newtons per cm.

In some embodiments, the adhesive tape further comprises a primer disposed between at least one of the longitudinal sides of the substrate and the adhesive layer having the polymer component disposed thereon. Exemplary primer includes cross linked aliphatic urethane.

In some embodiments, the polymer component further comprises a crosslinking agent. In some embodiments, the polymer component further comprising an additive.

In another aspect, the present disclosure provides a tool comprising: (a) a printing plate, wherein the printing plate comprises (i) a polyester backing surface, and (ii) a polyamide, nitrocellulose or polyurethane ink binder residue layer on at least a portion of the polyester backing surface, (b) an adhesive tape according to any of the aforementioned embodiments, and (c) a tool base, wherein the first adhesive layer of the adhesive tape is in contact with the ink binder residue layer, and further wherein the second adhesive layer of the adhesive tape is in contact with the tool base.

In yet another aspect, the present disclosure provides a process for mounting printing plates comprising: (a) providing an adhesive tape according to any of the aforementioned embodiments; (b) applying the second adhesive layer of the adhesive tape to a tool base; (c) mounting a clean printing plate on the first adhesive layer; (d) placing the mounted tool base on a printing press; (e) printing multiple images on the printing press with a printing ink containing polyamide, nitrocellulose or polyurethane ink binder(s); (f) demounting the printing plate without damage to any of the adhesive tape layers or transfer of any of the adhesive tape layers to the printing plate or printing plate surface; (g) cleaning ink residue from the printing plate; and (h) repeating steps (a) through (g) at least one more time, wherein the printing plate used in step (c) is a previously used plate.

Various aspects and advantages of exemplary embodiments of the present disclosure have been summarized. The above Summary is not intended to describe each illustrated embodiment or every implementation of the present disclosure. Further features and advantages are disclosed in the embodiments that follow. The Drawings and the Detailed Description that follow more particularly exemplify certain preferred embodiments using the principles disclosed herein.

## BRIEF DESCRIPTION OF THE DRAWINGS

The disclosure may be more completely understood in consideration of the following detailed description of various embodiments of the disclosure in connection with the accompanying figures, in which:

**FIG. 1** is a cross section view of an exemplary adhesive tape according to the present disclosure.

**FIG. 2** is a cross section view of a tool according to the present disclosure.

While the above-identified drawings, which may not be drawn to scale, set forth various embodiments of the present disclosure, other embodiments are also contemplated, as noted in the Detailed Description. In all cases, this disclosure describes the presently disclosed invention by way of representation of exemplary embodiments and not by express limitations. It should be understood that numerous other modifications and embodiments can be devised by those skilled in the art, which fall within the scope of this disclosure.

## DETAILED DESCRIPTION

As used in this specification, the recitation of numerical ranges by endpoints includes all numbers subsumed within that range (e.g. 1 to 5 includes 1, 1.5, 2, 2.75, 3, 3.8, 4, and 5, and the like).

Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

For the following defined terms, these definitions shall be applied for the entire Specification, including the claims, unless a different definition is provided in the claims or elsewhere in the Specification based upon a specific reference to a modification of a term used in the following Glossary:

Glossary

The words "a", "an", and "the" are used interchangeably with "at least one" to mean one or more of the elements being described.

The term "layer" refers to any material or combination of materials on or overlaying a substrate.

Words of orientation such as "atop, "on," "covering," "uppermost," "overlaying," "underlying" and the like for describing the location of various layers, refer to the relative position of a layer with respect to a horizontally-disposed, upwardly-facing substrate. It is not intended that the substrate, layers or articles encompassing the substrate and layers, should have any particular orientation in space during or after manufacture.

The term "separated by" to describe the position of a layer with respect to another layer and the substrate, or two other layers, means that the described layer is between, but not necessarily contiguous with, the other layer(s) and/or substrate.

The term "(co)polymer" or "(co)polymeric" includes homopolymers and copolymers, as well as homopolymers or copolymers that may be formed in a miscible blend, e.g., by coextrusion or by reaction, including, e.g., transesterification. The term "copolymer" includes random, block, graft, and star copolymers.

The term "PET" as used herein means BOPET, which is made from biaxially stretched polyethylene terephthalate film.

The term "highly polar" as used herein means functional monomers including those having polar functional moieties such as carboxylic acids, sulfonic acids, phosphoric acids, alcohols, lactams, lactones; N-substituted amides, N-substituted amines, carbamates, and the like.

The term "clean" as used herein means a printing plate having a PET surface that is substantially free of contaminants, for example 95% or greater of the surface area of the PET surface is free of contaminants.

The terms "PSA tape" and "adhesive tape" are used interchangeably throughout the present disclosure.

"Fedors method" refers to the technique for calculating solubility parameter values described in Fedors, Polym. Eng. and Sci., 14:147 (1974).

Within the printing industry there are a variety of techniques known for transferring designs to paper and films webs. One known option is flexographic printing. In the flexographic printing process, flexible printing plates are bonded to printing cylinders or printing sleeves. Such plates are composed, for example, of a PET film to which is applied a layer of a photopolymer, into which the corresponding print relief can be introduced by exposure to ultraviolet light. In this case the bonding of the plate to the printing cylinder or printing sleeve is via the PET film.

For the bonding operation it is usual to use double sided PSA tapes, which are subject to very exacting requirements. For the printing operation, the PSA tape is required to have a particular hardness and elasticity. These properties must be set very precisely, so that the resulting printed image, in accordance with the requirements, delivers the desired result. Exacting requirements are also imposed on the PSA because the bond strength must be sufficient so that the printing plate does not detach from the double sided PSA tape, or the PSA tape from the cylinder or sleeve. This is important even at increased temperatures of 40 °C to 60 °C and at relatively high printing speeds. Besides this characteristic, however, the PSA is also required to possess good adhesion properties when repositioned, in order to be mounted and demounted repeatedly from substrates, such as printing plates after the printing operations. For such repositionable adhesion, it is important that the PSA tape can be removed from the printing cylinder or printing sleeve without leaving adhesive residue on the print cylinder or print sleeve, in order to ensure that both components can be used again. This repositionable adhesion ought to exist even after bonding over a relatively long time period (up to 6 months). It is desirable, moreover, for the PSA tape, and particularly the printing plate, to be removable without suffering damage, and without great expenditure of force, since the printing plates are usually used more than once. Moreover, there should be no adhesive residues remaining on the printing plate or on the cylinder or sleeve.

Referring now to Fig. 1, adhesive tapes useful in the present disclosure include a substrate 14 having a first longitudinal side opposite a second longitudinal side, a first adhesive layer 12 disposed on the first longitudinal side, and a second adhesive layer 16 disposed on the second longitudinal side.

At least one of the first and second adhesive layers of the present disclosure include a polymer-based pressure-sensitive adhesive which is preparable from a monomer mixture comprising at least components (a), (b) and (c) as defined in claim 1. Any embodiments which do not fall under the scope of the claims are given for reference purposes only.

Pressure-sensitive adhesive useful in the present disclosure include the abovementioned criteria and exhibit the following advantages: peel force from new plate of greater than or equal to 0.055 N/cm; peel force from residue coated plate of less than or equal to 5.47 N/cm; plate touch down resistance between 0.2 and 8.0 N/cm; and plate lifting resistance of less than 3.0 mm/48 hours.

In order to obtain the polymer glass transition temperature, $T_g$, the monomers are selected in such a way, and the quantitative composition of the monomer mixture advantageously chosen in such a way, that the polymer has the desired $T_g$ in accordance with equation below (in analogy to the Fox equation; cf. T. G. Fox, Bull. Am. Phys. Soc. 1 (1956) 123).

$$\frac{1}{T_G} = \sum_n \frac{W_n}{T_{G,n}}$$

In this equation, n represents the serial number of the monomers used, $W_n$ represents the mass fraction of the respective monomer n (% by weight), and $T_{g,n}$ represents the respective glass transition temperature of the homopolymer of each of the monomers n, in K.

(Meth)acrylic monomers useful in component (a) of the present disclosure encompass isooctyl acrylate, 2-ethylhexyl acrylate, n-butyl acrylate, ethyl acrylate, and combinations thereof.

The linear or branched acrylic ester useful as component (b) in the first and/or second adhesive layer is isobornyl acrylate.

The highly polar vinyl substituted monomers useful as component (c) in the first and/or second adhesive layer is acrylic acid. In the present invention, components (a), (b) and (c) are as defined in claim 1.

In the present invention, the first and/or second adhesive layer includes linear or branched acrylic esters in component (a) selected from at least one of isooctyl acrylate, 2-ethylhexyl acrylate, n-butyl acrylate, ethyl acrylate, and combinations thereof; cyclic acrylic esters in component (b) selected as isobornyl acrylate; and the highly polar vinyl substituted monomers in component (c) selected as acrylic acid.

In some embodiments, the adhesive tape includes an optional chemical primer layer and/or a corona treatment layer disposed between substrate 14 and at least one of the adhesive layers 12, 16. Illustrative examples of suitable chemical primer layer types include urethanes, silicones, epoxy resins, vinyl acetate resins, ethyleneimines, and the like. Selection of a suitable primer layer or treatment will be dependent in part upon the characteristics of substrate 14, at least one of the adhesive layers 12, 16, and the conditions under which the resultant article will be used. Urethane and silicone types are particularly effective chemical primers for use with polyester film substrates. One suitable silicone type of primer layer has a continuous gelled network structure of inorganic particles, and is described in Japanese Unexamined Pat. Publication (Kokai) No. 2-200476. This primer layer has a strong affinity for polyester resins and polyolefin resins. Illustrative examples of chemical primers for vinyl and polyethylene terephthalate films include the crosslinked acrylic ester/acrylic acid copolymers disclosed in US 3,578,622 (Brown).

The presently disclosed PSA tapes generally adhere well to many surfaces. However, in some cases it may be useful to enhance the adhesion to a substrate by enhancing the mechanical interlocking of the adhesive with the substrate which can be done, for example, by abrasion or etching of the substrate or priming with a material which significantly increases the surface area for the adhesive to adhere to, such as the sol-gel primer discussed below. PSAs useful in the present disclosure can contain functional monomers, such as acrylic acid. These functional monomers can strongly interact with chemical primers by such mechanisms as hydrogen bonding, acid-base interaction or reaction across the adhesive/primer interface. In some embodiments, the primer is a cross linked aliphatic urethane.

The thickness of the chemical primer layer is suitably within the range of 10 to 3,000 nanometers ("nm"). If the thickness is less than 10 nm, the primer effect is minimal; if it exceeds 3,000 nm, on the other hand, interlayer peel is likely to occur in the primer layer.

Corona treatment is physical priming that can be suitably applied to at least one longitudinal surface of the substrate 14 onto which is then coated at least one of the adhesive layers 12, 16. A surface treatment is preferred to obtain strong adhesion between the substrate 14 and at least one of the adhesive layers 12, 16. In general, surface treatments may be described as chemical treatments, physical treatments, and combinations thereof, so that the following illustrative surface treatments may be appropriate:

1) Aliphatic polyurethane primer coating (applied after corona treatment), an example of which is as follows (amounts in parts by weight):

TABLE A

| Amount Component |
|---|
| 58.28 NEOREZ R-960 aliphatic polyurethane (Zeneca Resins) |
| 31.09 Deionized water |

(continued)

| Amount | Component |
|---|---|
| 1.56 | CX-100 multifunctional aziridine (Zeneca Resins) |
| 0.03 | Calcofluor Dye (BASF) |
| 8.77 | Ethanol |
| 0.77 | FC 93 fluorochemical (Sumitomo 3M Co.) |
| 0.20 | Bubble Breaker 3056A (Witco Corp.) |

2) Sol-gel primer coating after corona treatment. The technology of Sol-gel primer is based on Assignee's Japanese Patent J02200476-A, an example of which is presented in Table B (amounts in parts by weight):

TABLE B

| Amount | Component |
|---|---|
| 67.56 | Deionized water |
| 31.63 | Nalco 2326, colloidal silica (Nalco Chemical Co.) |
| 0.41 | A-1100 silane coupling agent (Nippon Yunika) |
| 0.40 | Triton X-100 surfactant 10 weight percent aqueous solution (Rohm & Haas) |

3) Nitrogen corona treatment.
Corona treatment of the surface in the present invention can be suitably carried out in a nitrogen atmosphere because the duration of the improvement of inter-layer adhesion is high. The useful energy density of the nitrogen corona treatment ranges from about 15 to 500 watts/meter$^2$ /minute, preferably about 80 to 250 watts/meter$^2$ /minute.
Corona treatment of films is a well-known technique, and is described generally in Cramm, R. H., and Bibee, D. V., The Theory and Practice of Corona Treatment for Improving Adhesion, TAPPI, Vol. 65, No. 8, pp 75-78 (August 1982).
4) thermoplastic adhesion promoter
Heat-activatable or thermoplastic adhesion promoters are also useful for enhancing the bond between the PSA and substrate surface
The term "heat-activatable" is conventionally used in the art of adhesive technology and means that in order to "activate" the adhesive it needs to be subjected to a heat treatment, typically between about 60 DEG.C and about 200 DEG.C, so as to allow the heat-activatable resin layer to bond to the substrate. It is preferred that the surface of the heat-activatable layer be softened applying temperature near its softening point, most preferably slightly above its melting point to achieve a good bond.

Examples of useful heat-activatable resins include alpha-olefins such as polyethylene, polypropylene, and blends and copolymers thereof; ethylene-modified copolymers such as ethylene/vinyl acetate, ethylene/acrylic acid, ethylene/methacrylic acid, ethylene/methacrylate, and blends and mixed polymers of these materials such as ethylene/methylacrylate/acrylic acid terpolymers, polyurethanes, polyamides, poly( vinyl chloride) and rubbery polymers such as ethylene/propylene/diene terpolymer, rubber modified polyolefins and styrene/butadiene rubbers.

In some embodiments, the adhesive polymer component includes a crosslinking agent. Crosslinking agents useful in the present disclosure include, but are not limited to, epoxides, aziridines, isocyanates, polycarbodiimides and metal chelates, to name but a few. A crosslinking agent may preferably be present in the polymer component included in at least one of the adhesive layers in an amount of about 0.05 to about 3 wt%, more preferably about 0.1 to 2 wt%, based on the weight of the monomers in the polymer component. Depending on the molecular weight and the acrylate equivalent weight of the components, as much as about 20 wt% of a crosslinking agent may be used. Amounts and types (or effectiveness) of crosslinking agent can also be varied in order to obtain a particular gel swell range for the resulting adhesives.

Gel swell can be used to measure the degree of crosslinking present in an adhesive. The gel swell can be determined by immersing a sample portion of known weight, W1 (about 0.5 g), of an adhesive test sample in 25 ml of a selected solvent (e.g. analytical reagent grade ethyl acetate) for 24 hours at about 23 °C, removing the resulting swelled sample portion, wiping or padding off the adhering film of solvent from the sample portion and quickly determining its weight, W2. The used solvent can then be evaporated to dryness and the weight, W3, of the dried residue (the solubilized fraction of the sample portion) also determined. The weight percent gel swell of the tested crosslinked adhesive is then calculated by the formula:

$$\% \text{ gel swell} = \frac{W_2 - W_3}{W_1} \times 100$$

The lower the percent gel swell, the greater the degree of crosslinking (see "Encyclopedia of Polymer Technology", Vol. 4, p. 63-65, published by Interscience Pub. (1966)).

The crosslinking agent useful in the adhesives of the present disclosure is typically an organic compound that reacts with the other monomers by virtue of having a plurality of ethylenically unsaturated groups, referred to herein as multifunctional acrylates. Alternatively, a crosslinking agent is a compound which can directly react with the polymeric backbone and result in crosslinking as, for example, in a peroxide thermal cure or benzophenone UV cure.

The adhesives in the adhesive layers of the present disclosure may be crosslinked before or after bonding of the adhesive layer to the substrate. There are two major crosslinking mechanisms for the acrylic polymer adhesives of the invention: free-radical copolymerization of multifunctional ethylenically unsaturated groups with the other monomers, and covalent or ionic crosslinking through the functional monomers, such as acrylic acid. Another method is the use of UV crosslinkers, such as copolymerizable benzophenones or post-added photocrosslinkers, such as multifunctional benzophenones and triazines. High energy irradiation, like electron-beam or gamma is also useful.

Crosslinking agents that are useful in the present disclosure may be selected from the group consisting of triazine compounds; acrylated urethanes such as the diacrylated urethanes known under the trade designation EBECRYL, especially EBECRYL 230 (a polyurethane diacrylate available from Radcure Specialties, Inc., Norfolk, Va.; hydrogen abstraction crosslinking compounds including copolymerizable mono-ethylenically unsaturated aromatic ketones, particularly 4-acryloxybenzophenone (ABP), as described in US 4,737,559 (Kellen et al.), and post-added multifunctional benzophenones as described in US 5,407,971 (Everaerts et al.); and multifunctional acrylates, such as 1,6-hexane diol diacrylate (HDDA).

Crosslinking agents are selected according to the polymerization method employed. Preferred crosslinking agents for adhesives prepared via photopolymerization on web are multifunctional acrylates such as 1,6-hexanediol diacrylate (HDDA) as well as those disclosed in US 4,379,201 (Heilmann et al.), such as trimethylolpropane triacrylate, pentaerythritol tetraacrylate, 1,2-ethylene glycol diacrylate, and 1,12-dodecanediol diacrylate.

Also useful as crosslinkers are acrylate and methacrylate functional oligomers, like EBECRYL 230 which, in view of their higher molecular weight, have lower acrylate content than the lower molecular weight diacrylates, such as 1,6-hexanediol diacrylate and the like, mentioned above. To compensate for this lower acrylate content, higher weight percentages of the oligomeric multifunctional acrylates must be used in the adhesive composition.

Additional useful crosslinking agents include hydrogen abstraction type photocrosslinkers such as those based on benzophenones, acetophenones, anthraquinones, and the like. These crosslinking agents can be copolymerizable or non-copolymerizable. Examples of non-copolymerizable hydrogen abstraction crosslinking agents include benzophenones, anthraquinones, and radiation-activatable crosslinking agents such as those described in U.S. Pat. No. 5,407,971. Such agents have the general formula

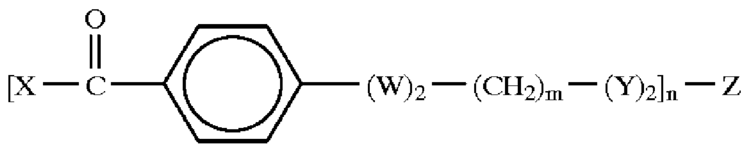

wherein W represents --O--, --N--, or --S--, X represents CH3 - or phenyl; Y represents a ketone, ester, or amide functionality; Z represents a polyfunctional organic segment that contains no hydrogen atoms more photoabstractable than hydrogen atoms of a polymer formed using the crosslinking agent; m represents an integer from 0 to 6; "a" represents 0 or 1; and n represents an integer of 2 or greater. Examples of copolymerizable hydrogen abstraction crosslinking compounds include mono-ethylenically unsaturated aromatic ketones, particularly 4-acryloxybenzophenone (ABP), as described in U.S. Pat. No. 4,737,559 (Kellen et al.).

Copolymerizable $\alpha$-cleavage type photoinitiators can also be employed, such as acrylamido-functional disubstituted acetyl aryl ketones.

In addition, combinations of multi-functional (meth)acrylates and the hydrogen abstraction type crosslinkers or copolymerizable $\alpha$ -cleavage type (Type I) photoinitiators can be used. Low intensity UV light, such as "UV black light", is sufficient to induce crosslinking in most cases; however, when hydrogen abstraction type crosslinkers are used by themselves, high intensity UV exposure is necessary to achieve sufficient crosslinking at high line speeds. Such exposure can be provided by a mercury lamp processor such as those available from PPG, Pittsburgh, Pa., Aetek, and others.

Yet another method for crosslinking that does not necessarily require addition of crosslinking agents is exposure to an electron-beam.

Other useful crosslinking agents include the substituted triazines, such as those disclosed in US 4,329,384 and US 4,330,590 (both to Vesley), such as 2,4-bis(trichloromethyl)-6-p-methoxystyrene-s-triazine and the chromophore halomethyl-s-triazines.

In some embodiments, crosslinking agents useful in preparing adhesives used in the adhesive tapes of the present disclosure are those which are free radically copolymerizable and which effect crosslinking through exposure to radiation, moisture or heat following polymerization. Such crosslinkers include the above mentioned photoactive substituted triazines and hydrogen abstraction type photocrosslinkers. Hydrolyzable, free-radically copolymerizable crosslinkers such as mono-ethylenically unsaturated mono-, di-, and trialkoxysilane compounds including, but not limited to, 3-methacryloxypropyltrimethoxysilane (sold under the trade designation "SILANE A-174" by Union Carbide Chemicals and Plastics Co.), vinyldimethylethoxysilane, vinylmethyldiethoxysilane, vinyltriethoxysilane, vinyltrimethoxysilane, vinyltriphenoxysilane, and the like are also useful crosslinking agents.

Heat activated copolymerizable crosslinking agents, including but not limited to N-methylolacrylamide and acrylamidoglycolic acid, and the like are also useful crosslinking agents.

Multifunctional aziridine crosslinking agents may also be employed. Bisamide crosslinking agents are more fully described as compounds with the general formula (I):

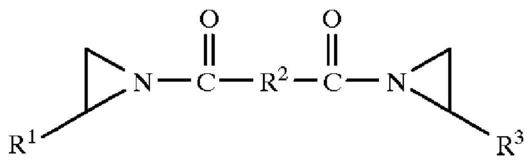

wherein $R^1$ and $R^3$ are the same or different and are independently selected from the group consisting of H and $C_nH_{2n+1}$, wherein n is an integer ranging from 1 to about 5, and $R^2$ is a divalent radical selected from the group consisting of phenylene (--$C_6H_4$--), substituted phenylene, and $C_mH_{2m}$, where m is an integer ranging from 1 to about 10. An example of a useful multifunctional aziridine within general formula I is N,N'-bis-1,2-propyleneisophthalamide, which has the following structure (general formula II):

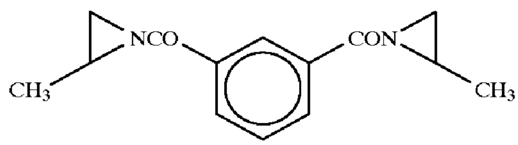

Examples of suitable crosslinkers include metal chelates, such as Z. aluminum or titanium chelates, polyfunctional isocyanates, polyfunctional amines, polyfunctional alcohols or polyfunctional epoxides.

Examples of suitable thermal crosslinkers include aluminum(III) acetylacetonate, titanium(IV) acetylacetonate or iron(III) acetylacetonate. It is, however, also possible to use, for example, the corresponding zirconium compounds for crosslinking. Besides the acetylacetonates, suitability is likewise possessed by the corresponding metal alkoxides, such as titanium(IV) n-butoxide or titanium(IV) isopropoxide, for example.

PSAs used in the present disclosure may also include minor amounts of additives. Such additives may include, for example, pigments, dyes, plasticizers, fillers, stabilizers, UV radiation absorbers, antioxidants, processing oils, and the like. The amount of additive(s) used can vary from 0.1 to 50 weight percent of the PSA material, depending on the end use desired. Any additive(s) used preferably do not significantly absorb radiation near the wavelength of maximum absorption of any photocrosslinker included in the polymer composition.

Substrate materials useful in the present disclosure include a variety of materials. In some embodiments, foam is a particularly useful material in the substrate. In some embodiments, the foam selected for use in the present disclosure has a density of 0.32 g/$cm^3$ (20 lbs/$ft^3$) or less. In some embodiments, the foam is a low strength foam substrate, such as for example those having densities of 0.15 g/$cm^3$ (9.5 lbs/$ft^3$) or less. In some embodiments, the substrate may include at least one additional layer, such as a film layer. In some embodiments, the substrate may include two or more additional layers, such as film layers, where the film layers can be disposed on one another using various techniques, such as bonding using adhesive layers and/or primer layers.

Referring now to Fig. 2, the present disclosure provides a tool 100 for printing images on a printing press. Such a tool generally includes a printing plate 110. Printing plates 110 useful in the present disclosure generally have polyethylene terephthalate (PET) backing surfaces, i.e. the surface opposite the relief print image surface. In some embodiments, the printing plate 110 can be a new, unused printing plate. In some embodiments, the printing plate 110 is a

previously used or stored printing plate, which may have ink binder residue, such as a polyamide, nitrocellulose or polyurethane ink binder residue, on the PET backing surface.

The presently disclosed tool 100 also has an adhesive tape 10 according to any of the previously disclosed embodiments. At least one of the adhesive layers of an adhesive tape 10 comprising the adhesive component disclosed above is in contact with the printing plate backing surface which may have an ink binder residue layer thereon and the other, opposite adhesive layer is in contact with the tool base. For example, in some embodiments, the first adhesive layer 108 comprising the adhesive component disclosed above is in contact with the printing plate backing surface 110 which may have an ink binder residue thereon and the second adhesive layer 104 is bonded to a tool base 102. There is a substrate 106 disposed between the first and second adhesive layers 104, 108. In some embodiments, the tool base 102 is a print cylinder or sleeve.

At least one of the adhesive layers comprises the polymer component discussed above. In some embodiments, both the first and second adhesive layers comprise the polymer component disclosed above. In some embodiments, one of the adhesive layers is different that than the other adhesive layer. For example, in some embodiments, any known PSAs can be used for the second adhesive layer 104 in Fig. 2. Examplary PSAs include, for example, rubber-based PSAs, synthetic rubber PSAs, PSAs based on polysilicones, polyurethanes, polyolefins or polyacrylates.

In some embodiments, the second adhesive layer 104 can be a conventional polyacrylate pressure sensitive adhesive. In some embodiments, the second adhesive layer 104 is preferably a self-crosslinking pressure sensitive adhesive based on the block copolymers.

As monomers for preparing the second adhesive layer 104 it is preferred to use the monomers already specified for the preparation of the acrylate block copolymers, namely acrylic or methacrylic monomers with hydrocarbon radicals having 4 to 14 carbon atoms, preferably having 4 to 9 carbon atoms (specific examples: methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, such as isobutyl acrylate, 2-ethylhexyl acrylate, 2-ethylhexyl methacrylate, isooctyl acrylate, and isooctyl methacrylate), and also monofunctional acrylates and methacrylates of bridged unsubstituted and/or substituted (e.g., by C1-6 alkyl groups, halogen or cyano groups) cycloalkyl alcohols, composed in particular of at least 6 carbon atoms (specific examples: cyclohexyl methacrylates, isobornyl acrylate, isobornyl methacrylates and 3,5-dimethyladamantyl acrylate), and also monomers containing one or more polar groups (e.g., carboxyl, sulfonic and phosphonic acid, hydroxy-, lactam and lactone, N-substituted amide, N-substituted amine, carbamate-, epoxy-, thiol-, ether, alkoxy-, cyano- or the like); additionally, basic monomers are, for example, N,N-dialkyl substituted amides, such as N,N-dimethylacrylamide, N,N-dimethylmethylmethacrylamide, N-tert-butylacrylamide, N-vinylpyrrolidone, N-vinyllactam, dimethylaminoethyl methacrylate, dimethylaminoethyl acrylate, diethylaminoethyl methacrylate, diethylaminoethyl acrylate, N-methylolmethacrylamide, N-(buthoxymethyl)methacrylamide, N-methylolacrylamide, N-(ethoxymethyl)acrylamide, N-isopropylacrylamide.

Further particularly preferred examples of monomers which can be used are hydroxyethyl acrylate, hydroxypropyl acrylate, hydroxyethyl methacrylate, hydroxypropyl methacrylate, allyl alcohol, maleic anhydride, itaconic anhydride, itaconic acid, glyceridyl methacrylate, phenoxyethyl acrylate, phenoxyethyl methacrylate, 2-butoxyethyl methacrylate, 2-butoxyethyl acrylate, cyanoethyl methacrylate, cyanoethyl acrylate, glyceryl methacrylate, 6-hydroxyhexyl methacrylate, vinylacetic acid, tetrahydrofurfuryl acrylate, [beta]-acryloyloxypropionic acid, trichloroacrylic acid, fumaric acid, crotonic acid, aconitic acid, dimethylacrylic acid, this listing not being exhaustive.

Additionally preference is given to using the following monomers vinyl esters, vinyl ethers, vinyl halides, vinylidene halides, vinyl compounds with aromatic rings and heterocycles in a position (examples of the aforementioned: named: vinyl acetate, vinylformamide, vinylpyridine, ethyl vinyl ether, vinyl chloride, vinylidene chloride, and acrylonitrile), and also monomers which possess a high static glass transition temperature, and also aromatic vinyl compounds, such as styrene, preferably with aromatic nuclei made up of C4 to C18 units, with or without heteroatoms (particularly preferred examples: 4-vinylpyridine, N-vinylphthalimide, methylstyrene, 3,4-dimethoxystyrene, 4-vinylbenzoic acid, benzyl acrylate, benzyl methacrylate, phenyl acrylate, phenyl methacrylate, t-butylphenyl acrylate, t-butylphenyl methacrylate, 4-biphenyl acrylate and methacrylate, 2-naphthyl acrylate and methacrylate, and mixtures of these monomers).

In order to prepare poly(meth)acrylate PSAs for the second adhesive layer 104, it is advantageous to carry out conventional free-radical polymerizations. For the polymerizations proceeding by a radical mechanism it is preferred to use initiator systems that additionally comprise further radical initiators for the polymerization, especially thermally decomposing, radical-forming azo or peroxo initiators. Any customary initiators that are familiar to the skilled worker for acrylates are suitable. The production of C-centered radicals is described in Houben Weyl, Methoden der Organischen Chemie, Vol. E 19a, pp. 60-147.

Examples of radical sources are peroxides, hydroperoxides, and azo compounds; some nonexclusive examples of typical radical initiators that may be mentioned here include potassium peroxodisulfate, dibenzoyl peroxide, cumene hydroperoxide, cyclohexanone peroxide, di-t-butyl peroxide, azodiisobutyronitrile, cyclohexylsulfonyl acetyl peroxide, diisopropyl percarbonate, t-butyl peroctoate, and benzpinacol. 1,1'-Azobis(cyclohexanecarbonitrile) (Vazo 88(TM) from

DuPont) or azodiisobutyronitrile (AIBN) is very advantageously used as radical initiator.

The average molecular weights $M_N$ of the opposite pressure sensitive adhesives formed in the course of the radical polymerization are very preferably chosen such as to be situated within a range from 20,000 to 2,000,000 g/mol; specifically for further use as hotmelt pressure sensitive adhesives, PSAs having average molecular weights $M_N$ of from 100,000 to 500,000 g/mol are prepared. The number average molecular weight is determined by size exclusion chromatography (SEC) or matrix-assisted laser desorption/ionization mass spectrometry (MALDI-MS).

The polymerization may be carried out in bulk, in the presence of one or more organic solvents, in the presence of water, or in mixtures of organic solvents and water. The aim is to minimize the amount of solvent used. Suitable organic solvents are pure alkanes (e.g., hexane, heptane, octane, isooctane), aromatic hydrocarbons (e.g., benzene, toluene, xylene), esters (e.g., ethyl, propyl, butyl or hexyl acetate), halogenated hydrocarbons (e.g., chlorobenzene), alkanols (e.g., methanol, ethanol, ethylene glycol, ethylene glycol monomethyl ether), and ethers (e.g., diethyl ether, dibutyl ether) or mixtures thereof. A water-miscible or hydrophilic co-solvent may be added to the aqueous polymerization reactions in order to ensure that in the course of monomer conversion the reaction mixture is in the form of a homogeneous phase. Useful co-solvents for the present disclosure are chosen from the following group of aliphatic alcohols, glycols, ethers, glycol ethers, pyrrolidines, N-alkylpyrrolidinones, N-alkylpyrrolidones, polyethylene glycols, polypropylene glycols, amides, carboxylic acids and salts thereof, esters, organic sulfides, sulfoxides, sulfones, alcohol derivatives, hydroxy ether derivatives, amino alcohols, ketones, and the like, and also derivatives and mixtures thereof.

The polymerization time is between 4 hours and 72 hours depending on conversion and temperature. The higher the reaction temperature can be chosen, i.e., the higher the thermal stability of the reaction mixture, the lower the reaction time.

For the initiators that undergo thermal decomposition, the introduction of heat is essential to initiate the polymerization. For the thermally decomposing initiators the polymerization can be initiated by heating at from 50 to 160 °C., depending on initiator type.

Another advantageous preparation process for polyacrylate PSAs useful in the second adhesive layer 104 is anionic polymerization. For anionic polymerization, it is preferred to use inert solvents as the reaction medium, such as aliphatic and cycloaliphatic hydrocarbons, for example, or else aromatic hydrocarbons.

For the technical adhesive properties it may be of advantage to crosslink the second adhesive layer 104. For UV crosslinking it is useful to add UV photoinitiators. The photoinitiators may be of the Norrish I or Norrish II type. A number of groups of photoinitiators may be listed, as follows: benzophenone, acetophenone, benzil, benzoin, hydroxyalkylphenone, phenyl cyclohexyl ketone, anthraquinone, trimethylbenzoylphosphine oxide, methylthiophenyl morpholinyl ketone, aminoketones, azobenzoins, thioxanthone, hexarylbisimidazole, triazine, or fluorenone, it being possible for each of these radicals to be further substituted by one or more halogen atoms and/or one or more alkoxy groups and/or one or more amino groups or hydroxyl groups. A representative overview is given in "Photoinitiation, Photopolymerization and Photocuring, Fundamentals and Applications", by J.-P. Fouassier, Hanser Publishers, Munich, Vienna, New York 1995. For further details, consult "Chemistry & Technology of UV & EB Formulation for Coatings, Inks & Paints", Volume 5, A. Carroy, C. Decker, J. P. Dowling, P. Pappas, B. Monroe, ed. by P. K. T. Oldring, publ. by SITA Technology, London, England 1994.

Where the second adhesive layer 104 is applied from solution, it may be useful to add from 0.05 to 3% by weight, more preferably from 0.1 to 2% by weight, of crosslinkers, based on the weight fraction of the monomers in the adhesive.

The crosslinker is typically a metal chelate or an organic compound which reacts with a functional group of a comonomer and hence reacts directly with the polymer. For thermal crosslinking, peroxides as well are also suitable. For polymers containing acid groups it is also possible to use difunctional or polyfunctional isocyanates and difunctional or polyfunctional epoxides.

Examples of suitable thermal crosslinkers include aluminum(III) acetylacetonate, titanium(IV) acetylacetonate and iron(III) acetylacetonate. The corresponding zirconium compounds, for example, may also be used for crosslinking, however. Beside the acetylacetonates, the corresponding metal alkoxides, such as titanium(IV) n-butoxide or titanium(IV) isopropoxide, for example, are likewise suitable.

Moreover, for thermal cross linking, it is possible to use polyfunctional isocyanates sold under the trade designation "DESMODUR" from Bayer. Further crosslinkers may be difunctional or polyfunctional aziridines, oxazolidines or carbodiimides.

When crosslinking with actinic radiation, the second adhesive layer 104 is optionally blended with a crosslinker. Preferred substances that crosslink under radiation, include for example, difunctional or polyfunctional acrylates, including difunctional or polyfunctional urethane acrylates, or difunctional or polyfunctional methacrylates. Simple examples thereof include 1,6-hexanediol diacrylate, pentaerythritol tetraacrylate, trimethylolpropane triacrylate, or 1,2-ethylene glycol diacrylate. However, it is also possible to use any known difunctional or polyfunctional compounds that are capable of crosslinking polyacrylates under radiation.

For modifying the technical adhesive properties of the prepared poly(meth)acrylates as second adhesive layer

104, the polymers are optionally optimized by blending with at least one resin. Tackifying resins to be added include without exception all existing tackifier resins described in the literature. Representatives that may be mentioned include the pinene resins, indene resins, and rosins, their disproportionated, hydrogenated, polymerized, esterified derivatives and salts, the aliphatic and aromatic hydrocarbon resins, terpene resins and terpene-phenolic resins, and also C5, C9, and other hydrocarbon resins. Any desired combinations of these and further resins may be used in order to adjust the properties of the resulting adhesive in accordance with what is desired. In general it is possible to use all resins which are compatible (soluble) with the corresponding polyacrylate; mention may be made in particular of all aliphatic, aromatic, and alkylaromatic hydrocarbon resins, hydrocarbon resins based on pure monomers, hydrogenated hydrocarbon resins, functional hydrocarbon resins, and natural resins. Explicit reference is made to the depiction of the state of the art in the "Handbook of Pressure Sensitive Adhesive Technology" by Donatas Satas (van Nostrand, 1989).

In some embodiments, one or more plasticizers, such as low molecular mass polyacrylates, phthalates, whale oil plasticizers (water-soluble plasticizers) or plasticizing resins, for example, are added to the opposite pressure sensitive adhesive.

Acrylic PSAs useful in the second adhesive layer 104 may further be blended with one or more additives such as aging inhibitors, light stabilizers, ozone protectants, fatty acids, resins, nucleators, blowing agents, compounding agents and/or accelerators. Further, they may be admixed with one or more fillers such as fibers, carbon black, zinc oxide, titanium dioxide, solid or hollow glass (micro) beads, microbeads of other materials, silica, silicates, and chalk, with the addition of blocking-free isocyanates also being possible.

Particularly for use as a pressure sensitive adhesive, it may be of advantage if the polyacrylate is applied from the melt as a layer. For this purpose, the poly(meth)acrylates as described above are concentrated to a hotmelt. This process takes place preferably in a concentrating extruder. Then, in one advantageous variant of the process, the adhesive is applied as a hotmelt in the form of a layer to a carrier or to a carrier material.

Therefore, prior to the crosslinking operation, the poly(meth)acrylates are advantageously applied to a carrier. Coating takes place from solution or from the melt onto the carrier material. For application from the melt, the solvent is preferably stripped off under reduced pressure in a concentrating extruder, possibly using for example single-screw or twin-screw extruders, which advantageously remove the solvent by distillation in different or identical vacuum stages, and which possess a feed preheater. Following concentration, the solvent content is preferably $\leq$ 2% by weight, with particular preference $\leq$ 0.5% by weight. The poly(meth)acrylate is then advantageously crosslinked on the carrier.

For the crosslinking operation it may be of advantage to subject second adhesive layer 108 to UV radiation. UV irradiation then takes place with a wavelength range from 200 to 450 nm, especially using high or medium pressure mercury lamps with an output of from 80 to 240 W/cm. For UV crosslinking, however, it is also possible to use monochromatic radiation in the form of lasers. In order to prevent overheating it may be appropriate to shade off the UV beam path in part. Further, special reflector systems can be used, functioning as cold light emitters, in order to prevent overheating.

In addition, it may be of advantage to crosslink the second adhesive layer 104 using electron beams. Typical radiating equipment which may be used are linear cathode systems, scanner systems, and/or segmented cathode systems, where said systems are electron beam accelerators. A detailed description of the sate of the art and of the most important process parameters is given in Skelhorne "Electron Beam Processing" in Vol. 1 "Chemistry & Technology of UV & EB Formulations for Coatings, Inks & Paints" published by Sita Technology, London 1991. The typical accelerator voltages are in the range between 50 kV and 500 kV, preferably from 80 kV to 300 kV. The radiation doses employed range between 5 to 150 kGy, in particular from 20 to 100 kGy.

The present disclosure provides a process for mounting printing plates including the steps of (a) providing an adhesive tape according to any of the embodiments described herein; (b) applying the second adhesive layer of the adhesive tape to a tool base; (c) mounting a clean printing plate on the first adhesive layer comprising the polymer component disclosed in any of the aforementioned embodiments; (d) placing the mounted tool base on a printing press; (e) printing multiple images on the printing press with a printing ink containing polyamide, nitrocellulose or polyurethane ink binder(s); (f) demounting the printing plate without damage to any of the adhesive tape layers or transfer of any of the adhesive tape layers to the printing plate or printing plate surface; (g) cleaning ink residue from the printing plate print surface; (h) repeating steps (a) through (g) at least one more time. In some embodiments, the order of applying the adhesive tape to the tool base and printing plate may be reversed.

In some embodiments, the tool based is print cylinder or sleeve. In some embodiments, the printing plate is made using a PET backing material. The printing plates useful in this step of the process are typically newly made printing plates, such as printing plates that have never been used for printing or have essentially no contaminants, such as ink residue, on them. In some embodiments, the cleaning step includes removing the contaminants, such as ink residues, from the printing plate surface with an automatic plate washer by saturating the plate print surface with a solvent mixture containing solvated printing ink binder resins. In some embodiments cleaning of ink residue from the printing plates is carried out by automated plate washing equipment. For example equipment manufactured by PolyMount Polymount International B.V., Nijkerk, Holland

Ink residues on the PET side of the plate generally come from the process of washing the photopolymer plate print surface after the plate has been demounted from the tool (to allow future reuse of the plate). This is because the plate washing process often allows the solvent clean solution with dissolved ink binders to contact the PET side of the plate and, unless special efforts are taken, such as for example wiping the PET plate back with fresh solvent and a clean disposable towel, this inevitably leaves a layer of ink binder residue on the plate back.

In some embodiments, when the printing plate is remounted (such as in the repeat of step (c)), the clean plate can be remounted in the same manor as used initially in step (c) to the same or different print cylinder(s) or sleeve(s) using a second unused piece of said tape.

In some embodiments the adhesive component is a generally random copolymer, free of block copolymer segments. In some embodiments the adhesive may contain conventional pressure sensitive adhesive additives, including tackifier resins. The total level of tackifier resins present should be less than 10% wt based on the total amount of adhesive component and added tackifier resins.

The adhesive can be polymerized by conventional free radical polymerization methods, whether thermally or radiation initiated, including solution and bulk polymerization processes. In some embodiments the polymerization methods used yield high molecular weight polymer without the use of solvents, such as obtained from suspension, emulsion and bulk polymerization. In some embodiments, the adhesive is made by UV curing on the web, which yields the finished product in a single step.

In some embodiments the adhesives of the present disclosure can also be obtained from solvent polymerization with subsequent coating and drying, however, the adhesives may exhibit slightly different properties to those cured by UV polymerization.

Various types of release liners are useful with the PSA tapes of the present disclosure. For example, embossed release liners and/or unembossed release liners may be used with the PSA tapes of the present disclosure. Exemplary release liners suitable for use in the present disclosure include unembossed versions of the liner described in Example 1 of EP 1800865 A1 (Kapfer et al.), which discloses that the release liner provides passages for air release.

Exemplary embodiments of the present disclosure have been described above and are further illustrated below by way of the following Examples, which are not to be construed in any way as imposing limitations upon the scope of the present disclosure. On the contrary, it is to be clearly understood that resort may be had to various other embodiments, modifications, and equivalents thereof which, after reading the description herein, may suggest themselves to those skilled in the art without departing from the scope of the appended claims.

## EXAMPLES

The following examples are intended to illustrate exemplary embodiments within the scope of this disclosure. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

All amounts recited are in parts by weight unless otherwise specified.

**Materials**

| Designation | Description |
|---|---|
| solvent ink extender | 35 wt% solids Product Code: WKIFSO110295/K538, (Sun Chemical, Parsippany, NJ) (Published information and infrared spectral analysis indicates this solvent ink extender contains both polyamide and nitrocellulose binder resins in an short chain alcohol/acetate solvent mixture.) |
| Polywash 3000 | plate washing solution that is a mixture of ethylene glycol monobutyl ether, diacetone alcohol and other low vapor pressure solvents with high solubility in water (Coral Chemical Company, Waukegan IL) |
| IOA | isooctyl acrylate (Sigma-Aldrich Co., LLC, St. Louis, MO) |
| IBOA | isobornyl acrylate (Sigma-Aldrich Co., LLC) |
| AA | acrylic acid (Sigma-Aldrich Co., LLC) |
| HDDA | hexanediol diacrylate (Sigma-Aldrich Co., LLC) |

(continued)

| Designation | Description |
|---|---|
| 1651 | IRGACURE 651, 2,2-dimethoxy-2-phenylacetophenone photoinitiator (Ciba Geigy Corp., Tarrytown, NY) |
| 2,4-triazine | 2,4-bis(trichloromethyl)-6-(3,4 dimethoxyphenyl)-s-triazine (made by the co-trimerization of an arylnitrile with trichloroacetonitrile in the presence of HCl gas and a Lewis acid such as $AlCl_3$, $AlBr_3$, etc. [Bull. Chem. Soc. Japan, Vol. 42, page 2924 (1969)] |
| thermoplastic adhesion promoter | ethylene vinyl acetate (EVA) resin |
| EVA foam | closed cell, chemically crosslinked EVA foam having a nominal density of 0.192 grams/cubic centimeter (12 pounds/cubic foot) and a thickness of approximately 737 micrometers (0.029 inches) (such as those commercially available under the trade designation "VOLARA" from Sekisui Voltek, Lawrence, Mass) |
| SCOTCHPAK LF200M | a laminate of polyester film and an ethylene vinyl acetate copolymer heat seal layer (3M Company, St. Paul, MN) |
| printing plate | a medium durometer digital printing plate (such as those available under the trade designation "DUPONT CYREL DPL", DuPont Packaging Graphics, Wilmington, Delaware) having a thickness of 1.7 mm (0.067 inches) was prepared using industry standard processes on both the front and back sides such that the photopolymer (front) side was free of protective (mask) material prior to exposure and subsequent hardening to detackify the plate. |
| Tape 1 | "TESA 52221 SOFTPRINT SLEEVE MASTER", a double coated foam mounting tape having a medium hardness containing a polyethylene foam backing, an acrylic adhesive, and having a thickness of 500 micrometers (0.20 inches), (tesa Tape, Incorporated, Charlotte, NC) |
| Tape 2 | "TESA 52921 SOFTPRINT FE", a double coated foam mounting tape having a medium hardness and containing a closed cell polyethylene foam backing, an acrylic adhesive, a polyester stabilization film, and having a thickness of 500 micrometers (0.20 inches) (tesa Tape, Incorporated) |

## TEST METHODS

### Peel Adhesion: New Printing Plate

Double coated adhesive tape was cut to provide strips measuring 152 mm by 38 mm (6 inches by 1.5 inches). The protective release liner, if present, was removed from the cylinder side adhesive which was then centered lengthwise on, and adhered to, a sheet of anodized aluminum measuring 152 mm by 38 mm (6 inches by 2 inches) with a thickness of 1.6 mm (0.063 inches). The adhesive tape was then rolled down once in each direction using a rubber roller and firm hand pressure.

Next, after removal of the protective release liner from the plate side adhesive, the polyester back side of a new, exposed printing plate, previously wiped clean with isopropyl alcohol, measuring 178 mm by 25.4 mm (7 inches by 1 inch) was lightly adhered to the adhesive of the adhesive tape. The plate was positioned to be centered lengthwise along the tape and extending approximately 25 mm (1 inch) beyond the end of the tape to provide a tab. The plate was then rolled down once along its length using a 2.04 kg (4.5 pound) rubber coated roller without any additional pressure to provide test specimens.

The test specimens were evaluated for 90 degree angle adhesive removal force using an Intermediate Range Slip/Peel Tester, Model TL-2300 from IMASS, Incorporated, Accord, MA having a 4.5 kg (10 lb) load cell according to ASTM D3330 with certain modifications to conditioning, test speed (peel rate), initial delay time, and measurement time as summarized below and shown in the tables of results. The tab of the plate was attached to the load cell. The test specimen was mounted in a fixture at an angle of 45 degrees on a platen, and the load cell was positioned at an angle of 90 degrees with respect to the test specimen. The platen rate was adjusted to obtain the peel rates reported in the results. These peel rates account for the mounting geometry of the test specimen. After conditioning for 72 hours at 49 °C (120 °F) (oven was preheated), and allowing to cool to 21 °C (70 °F) one test specimen was evaluated for each test parameter combination.

Peel Rate

2.5 to 254 mm/second

Initial Delay Time

1.0 to 0.1 seconds depending on test speed

Measurement Time

5.0 to 0.2 seconds depending on test speed

**Preparation of Residue Coated Printing Plate**

Portions of a solvent ink extender and a plate washing solution were combined to provide a 3.5% by weight solids solution. To the backside of an isopropyl alcohol cleaned new printing plate sample was applied an aliquot, having a diameter of approximately 15 mm (0.59 inches), of the ink residue solution. This was spread over the entire plate surface using a lint free tissue paper and allowed to dry at 21 °C (70 °F) and 50% Relative Humidity for 25 +/- 5 minutes to provide an iridescent coating visible under reflected light. The plate sample was evaluated within 15 minutes for removability as described below.

**Peel Adhesion: Residue Coated Printing Plate**

Printing plate samples containing a residue of ink solution, prepared as described above, were used to prepare test specimens for evaluation as described in "Peel Adhesion: New Printing Plate" except they were not cleaned with isopropyl alcohol and they were conditioned at 72 hours at 21 °C (70 °F) and 50% Relative Humidity before testing.

**Edge Lift: New Printing Plate**

Double coated adhesive mounting tape was cut to provide strips measuring approximately 203 mm by 51 mm (8 inches by 2 inches). The protective release liner, if present, was removed from the cylinder side adhesive which was then adhered to a galvanized coated steel cylinder having a diameter of 89 mm (3.5 inches) by wrapping it lengthwise around the circumference of the cylinder. The tape was then rolled down circumferentially once in each direction using a rubber roller and firm hand pressure. Next, the liner was removed from the plate side adhesive of the mounting tape and the polyester side of a new printing, previously wiped clean with isopropyl alcohol, measuring 152 mm by 25.4 mm (6 inches by 1 inch) was lightly adhered to the exposed adhesive surface. The printing plate was centered lengthwise on the tape with initial contact being made near the center point of the tape and plate. The plate was then rolled down as described above except starting from the center point of the plate and rolling down to each end lengthwise twice to provide test specimens. The test specimens were placed in a preheated oven on their axial end and conditioned at 49 deg °C (120 °F) for 48 hours. After removal from the oven they were immediately evaluated for edge lifting. Any observed edge lift, i.e., the distance of separation of the plate from the mounting tape along the plane of the adhesive, was measured and recorded.

**Edge Lift: Residue Coated Printing Plate**

Printing plate samples containing a residue, prepared as described above, were used to prepare test specimens for evaluation as described in "Edge Lift: New Printing Plate " except they were not cleaned with isopropyl alcohol

**Plate Touch Down Resistance: New Printing Plate**

A new, exposed printing plate strip, previously wiped clean with isopropyl alcohol, measuring 152 mm by 25.4 mm (6 inches by 1 inch) was mounted with the PET side down in a test fixture attached to the load cell of a TA.XTPlus Texture Analyzer (Stable Micro Systems Ltd., Godalming, UK). The fixture held the printing plate strip in a downward facing parabolic loop by way of two (downward facing) clamps spaced 76 mm (3 inch) apart, and with approximately 6 mm (0.25 inches) of the each plate end held within the clamp.

Next a double coated adhesive mounting tape was cut to provide a test specimen measuring 32 mm by approximately 51 mm (1.25 inches by 2 inches) and, after removing any liner present, the cylinder side adhesive was adhered to a stainless steel sheet, and rolled down once in each direction using a rubber roller and firm hand pressure.

The stainless steel sheet was then affixed to the test stage of the Texture Analyzer directly below the plate loop so that the long axis of the loop aligned with 32 mm length of the tape specimen and the center of the loop was directly above the center point of the tape specimen. The release liner was then removed from the plate side adhesive. Next a travel return reference point was established with the bottom of the plate loop 15.0 +/- 1.0 mm from the test tape surface. The analyzer was programmed to move downward 20 mm and then immediately return 20 mm at a programmed test speed of 40 mm per second. As the plate loop was pulled back away from the tape surface, the maximum force was measured in grams force. The following equation was used to convert the data obtained to the results reported in N/cm.

$$18\text{ g force}/2.54\text{ cm} = 18/(102*2.54) = 0.07\text{ N/cm}$$

**Example 1 (EX1)**

A second adhesive precursor syrup was prepared by mixing 98 parts IOA, 2 parts AA, and 0.04 parts 1651 and partially polymerizing it under a nitrogen atmosphere by exposure to an ultraviolet radiation source having a spectral output from 300-400 nm with a maximum at 351 nm to provide a syrup having a viscosity of about 3 Pa*s (3000 cps) and a monomer conversion of about 8%. Next, 0.10 parts of 2,4-triazine, and an additional 0.15 parts of I651 were added to the syrup and fully dissolved to give the final coatable adhesive precursor syrup. The syrup was then knife coated onto the embossed side of a dual side siliconized polyethylene-coated polyester release liner, made as described in Example 1 of EP 1800865 A1, at a coverage rate of 52.3 grams/square meter (12.5 grains/24 square inches)). The resulting coating on release liner was then treated on its exposed surface to ultraviolet radiation by means of a series of lamps having a spectral output from 300-400 nm with at maximum at 351 nm in a nitrogen-rich atmosphere as follows: 30 seconds at 2.5 mW/ square centimeter, then 30 seconds at 4 mW/square centimeter, and finally 35 seconds at 9 mW/ square centimeter to give a total dose of 510 mJ/square centimeter as measured using a NIST calibrated UVIMAP radiometer (Electronic Instrumentation and Technology, Incorporated, Sterling, VA) to provide a pressure sensitive adhesive (PSA) layer 2 (cylinder side adhesive) on the embossed surface of the release liner

Next, a layer of a thermoplastic adhesion promoter was applied onto the exposed surface of PSA layer 2. The resulting adhesive transfer tape construction was laminated to EVA foam using a pair of nip rollers, one of which was heated, such that the adhesion promoter contacted the EVA foam. The thickness of the multilayer construction of foam/thermoplastic adhesion promoter/PSA layer 2/embossed film was then adjusted to approximately 470 micrometers (0.0185 inches), not including the embossed film release liner, by removal of foam from the exposed, uncoated foam surface to provide an intermediate multilayer foam article.

A first adhesive precursor syrup was prepared by mixing 64.5 parts IOA, 8.5 parts AA, 27 parts IBOA, and 0.04 parts 1651 and partially polymerizing it under a nitrogen atmosphere by exposure to an ultraviolet radiation source as described in the preparation of the first adhesive precursor above to provide a syrup having a viscosity of about 3 Pa·s (3000 cps) and a monomer conversion of about 8%. Next, 0.15 parts of 2,4- triazine, 0.175 parts of HDDA, and an additional 0.12 parts of I651 were added to the syrup and fully dissolved to give the final coatable adhesive precursor syrup. This syrup was then knife coated onto the embossed side of a release liner and exposed to ultraviolet irradiation as described for the first adhesive precursor syrup above to provide an adhesive transfer tape having PSA layer 1 (plate side adhesive) on the embossed surface of the release liner.

A hot melt adhesive coated polyester film, SCOTCHPAK LF200M, was provided and the exposed film surface corona treated under nitrogen atmosphere. Next, a water based primer coating of aliphatic polyurethane and a multifunctional aziridine was applied to the corona treated surface, then dried and crosslinked with heat. The adhesive transfer tape containing PSA layer 1 was laminated to the primed film surface using a pair of nip rollers at room temperature such that PSA layer 1 was bonded to the primed film surface to provide an intermediate multilayer article (embossed liner/ PSA layer 1/primer/corona SCOTCHPAK LF200M).

The intermediate multilayer article was then laminated to the intermediate multilayer foam article using a pair of nip rollers, one of which was heated, such that the hot melt adhesive layer of the intermediate multilayer article was bonded to the exposed foam surface of the intermediate multilayer foam article to provide a double coated adhesive mounting tape having release liners on both adhesive sides (PSA layer 2 and PSA layer 1). This mounting tape had a thickness of approximately 559 micrometers (0.022 inches) not including the two release liners. After removal of the release liner from PSA layer 2 the tape was wound into a roll. This was used to provide samples for evaluation as described in the test methods above. The results are reported in the tables below.

A series of comparative examples were provided and evaluated as described above, with the results shown in the tables below.

**Examples 2 — 9 (EX2-EX9)**

Examples 2 through 13 were prepared according to the description of Example 1, except the first adhesive precursor syrup was prepared by mixing the parts of monomers listed in Table 1 below in parts by weight based on the total weight of monomers.

**Comparative Example (CE) 1**

A double coated adhesive mounting tape was prepared as described in Example 1 except the composition of the first adhesive was IOA:AA/90:10 (w:w).

**Comparative Example (CE) 2**

A double coated adhesive mounting tape was prepared as described in Example 1 except the composition of the first adhesive was IOA:AA/98:2 (w:w).

**Comparative Example (CE) 3**

A commercially available double coated adhesive mounting tape, herein referred to as Tape 1, was employed as received.

**Comparative Example (CE) 4**

A commercially available double coated adhesive mounting tape, herein referred to as Tape 2, was employed as received.

**Comparative Examples 5 — 14 (EX5-EX14)**

Comparative Examples 5 through 14 were prepared according to the description of Example 1, except the first adhesive precursor syrup was prepared by mixing the parts of monomers listed in Table 1 below in parts by weight based on the total weight of monomers.

Table 1: Monomeric Components

| | Parts of Monomer | | |
|---|---|---|---|
| Example | IOA | AA | IBOA |
| 1 | 65 | 8 | 27 |
| 2 | 67.5 | 5.5 | 27 |
| 3 | 60 | 8 | 32 |
| 4 | 63.5 | 9.5 | 27 |
| 5 | 61.5 | 6.5 | 32 |
| 6 | 66.5 | 6.5 | 27 |
| 7 | 57 | 6 | 37 |
| 8 | 65 | 12.5 | 22.5 |
| 9 | 62 | 11 | 27 |
| CE5 | 74 | 3.5 | 22.5 |
| CE6 | 69.5 | 8 | 22.5 |
| CE7 | 57 | 11 | 32 |
| CE8 | 56.5 | 9.5 | 34 |
| CE9 | 71 | 2 | 27 |
| CE10 | 67 | 2 | 31 |

(continued)

| | Parts of Monomer | | |
|---|---|---|---|
| Example | IOA | AA | IBOA |
| CE11 | 69.5 | 3.5 | 27 |
| CE12 | 62.5 | 3.5 | 34 |
| CE13 | 63.5 | 14 | 22.5 |
| CE14 | 55 | 6 | 39 |

**Results**

Table 2: Peel Force (N/cm) from New Plate

| Example | Test Parameter | A | B | C | D | E | F | G |
|---|---|---|---|---|---|---|---|---|
| | Initial Delay time (sec) | 1.0 | 1.0 | 0.5 | 0.5 | 0.2 | 0.2 | 0.2 |
| | Measurement time (sec) | 10 | 10 | 2.0 | 2.0 | 1.0 | 0.5 | 0.2 |
| | Peel Rate (mm/sec) | 2.5 | 5.1 | 25.4 | 38 | 85 | 146 | 254 |
| 1 | | 0.75 | 0.94 | 0.70 | 0.63 | 0.45 | 0.55 | 0.44 |
| CE 1 | | 2.3 | 2.7 | 1.9 | 1.8 | 1.7 | 1.7 | 1.5 |
| CE 2 | | 3.0 | 3.5 | 4.9 | 5.6 | 6.8 | 8.5 | 9.6 |
| CE 3 | | 3.4 | 3.6 | 3.2 | 2.7 | 2.4 | 2.4 | 1.9 |
| CE 4 | | 1.9 | 1.8 | 1.5 | 1.5 | 1.3 | 1.2 | 1.0 |
| 2 | | 3.0 | 2.3 | 1.1 | 1.3 | 1.1 | 1.3 | 0.94 |
| 3 | | 0.55 | 0.58 | 0.47 | 0.59 | 0.42 | 0.44 | 0.38 |
| 4 | | 0.41 | 0.47 | 0.23 | 0.36 | 0.25 | 0.21 | 0.16 |
| 5 | | 1.1 | 1.0 | 0.76 | 0.74 | 0.72 | 0.80 | 0.62 |
| 6 | | 1.2 | 1.2 | 0.86 | 1.07 | 0.91 | 0.94 | 0.78 |
| 7 | | 0.43 | 0.55 | 0.39 | 0.42 | 0.36 | 0.23 | 0.20 |
| 8 | | 0.32 | 0.26 | 0.14 | 0.19 | 0.15 | 0.12 | 0.12 |
| 9 | | 0.33 | 0.32 | 0.23 | 0.26 | 0.21 | 0.17 | 0.12 |
| CE5 | | 2.6 | 3.2 | 4.0 | 3.7 | 3.1 | 3.0 | 2.2 |
| CE6 | | 1.7 | 1.1 | 1.0 | 1.1 | 0.94 | 0.77 | 0.70 |
| CE7 | | 0.00 | 0.21 | 0.11 | 0.15 | 0.11 | 0.14 | 0.05 |
| CE8 | | 0.00 | 0.28 | 0.16 | 0.22 | 0.16 | 0.15 | 0.13 |
| CE9 | | 2.0 | 2.7 | 3.2 | 3.3 | 2.3 | 2.3 | 2.0 |
| CE10 | | 2.3 | 3.0 | 2.8 | 2.0 | 1.7 | 1.8 | 1.5 |
| CE11 | | 2.2 | 2.8 | 2.2 | 3.6 | 2.8 | 2.5 | 2.2 |
| CE12 | | 2.3 | 2.1 | 1.4 | 1.4 | 1.3 | 1.6 | 1.3 |
| CE13 | | 0.21 | 0.19 | 0.14 | 0.13 | 0.09 | 0.10 | 0.07 |
| CE14 | | 0.44 | 0.55 | 0.44 | 0.44 | 0.43 | 0.32 | 0.29 |

Table 3: Peel Force (N/cm) from Residue Coated Plate

| Example | Test Parameter | A | B | C | D | E | F | G |
|---|---|---|---|---|---|---|---|---|
| | Initial Delay time (sec) | 1.0 | 1.0 | 0.5 | 0.5 | 0.2 | 0.2 | 0.2 |
| | Measurement time (sec) | 10 | 10 | 2.0 | 2.0 | 1.0 | 0.5 | 0.2 |
| | Peel Rate (mm/sec) | 2.5 | 5.1 | 25.4 | 38 | 85 | 146 | 254 |
| 1 | | 2.8 | 2.6 | 1.9 | 1.7 | 1.8 | 1.9 | 2.1 |
| CE 1 | | 5.5 | 6.4 | 9.8 | 9.0 | 12.5 | 9.0 | 9.9 |
| CE 2 | | 2.5 | 2.0 | 3.2 | 3.5 | 4.6 | 5.1 | 5.8 |
| CE 3 | | 0.74 | 0.74 | 0.61 | 0.66 | 0.58 | 0.60 | 0.63 |
| CE 4 | | 7.4* | 6.8* | 9.5* | 10.9* | 7.8* | 13.9* | 1.6 |
| 2 | | 5.0 | 3.0 | 2.4 | 3.0 | 1.9 | 2.4 | 2.5 |
| 3 | | 0.92 | 1.2 | 1.2 | 1.5 | 1.1 | 0.7 | 0.8 |
| 4 | | 0.85 | 1.7 | 1.3 | 1.6 | 0.9 | 0.99 | 0.9 |
| 5 | | 1.3 | 1.5 | 1.3 | 1.4 | 1.4 | 1.1 | 1.1 |
| 6 | | 2.0 | 2.1 | 1.9 | 2.2 | 2.4 | 2.2 | 2.6 |
| 7 | | 0.42 | 0.60 | 0.77 | 3.1 | 3.1 | 0.97 | 0.49 |
| 8 | | 3.8 | 4.1 | 1.4 | 1.6 | 0.98 | 1.29 | 0.76 |
| 9 | | 1.4 | 1.3 | 2.1 | 1.6 | 0.49 | 0.91 | 0.91 |
| CE5 | | 2.5 | 2.8 | 3.5 | 3.5 | 2.8 | 2.3 | 2.1 |
| CE6 | | 7.7 | 10.2 | 18.1* | 14.0* | 3.7 | 4.2 | 3.6 |
| CE7 | | 0.49 | 0.59 | 0.38 | 0.47 | 0.39 | 0.35 | 0.20 |
| CE8 | | 0.30 | 0.69 | 0.47 | 0.53 | 0.45 | 0.43 | 0.26 |
| CE9 | | 1.2 | 2.0 | 2.6 | 2.1 | 1.7 | 1.8 | 1.5 |
| CE10 | | 1.6 | 2.0 | 1.8 | 1.9 | 2.0 | 2.6 | 1.1 |
| CE11 | | 2.6 | 3.1 | 2.2 | 1.8 | 1.6 | 1.5 | 1.4 |
| CE12 | | 1.1 | 1.3 | 0.8 | 0.95 | 0.78 | 1.03 | 0.8 |
| CE13 | | 1.6 | 1.5 | 1.1 | 0.97 | 0.67 | 0.55 | 0.44 |
| CE14 | | 0.47 | 0.69 | 0.42 | 0.45 | 0.37 | 0.36 | 0.35 |
| * the foam split and adhesive residue was left on the printing plate. All other examples removed cleanly. | | | | | | | | |

Table 4: Edge Lift

| Example | Edge Lift (mm) | |
|---|---|---|
| | New Printing Plate | Residue Coated Printing Plate |
| 1 | 0.0 | 0.0 |
| CE 1 | 0.0 | 0.0 |
| CE 2 | 0.0 | 0.0 |
| CE 3 | 3.3 | 9.3 |
| CE 4 | 0.0 | 0.0 |
| 2 | 0.0 | 0.0 |

(continued)

| Example | Edge Lift (mm) | |
|---|---|---|
| | New Printing Plate | Residue Coated Printing Plate |
| 3 | 1.0 | - |
| 4 | 0.0 | - |
| 5 | 1.7 | - |
| 6 | 0.0 | - |
| 7 | 1.0 | - |
| 8 | 0.7 | - |
| 9 | 1.3 | - |
| CE5 | 10.5 | - |
| CE6 | 0.5 | - |
| CE7 | 1.0 | - |
| CE8 | 0.5 | - |
| CE9 | 11.0 | - |
| CE10 | 11.8 | - |
| CE11 | 3.0 | - |
| CE12 | 3.5 | - |
| CE13 | 0.5 | - |
| CE14 | 1.5 | - |

Table 5: Plate Touch Down Resistance: New Printing Plate

| Example | Peak Force |
|---|---|
| | (N/cm) |
| 1 | 18 |
| 2 | 191 |
| 3 | 43 |
| 4 | 20 |
| 5 | 105 |
| 6 | 167 |
| 7 | 105 |
| 8 | 42 |
| 9 | 13 |
| CE5 | 1604 |
| CE6 | 253 |
| CE7 | 31 |
| CE8 | 50 |
| CE9 | 3327 |
| CE10 | 2644 |

(continued)

| Example | Peak Force |
|---|---|
| | (N/cm) |
| CE11 | 475 |
| CE12 | 391 |
| CE13 | 1 |
| CE14 | 352 |

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove.

Various exemplary embodiments have been described. These and other embodiments are within the scope of the following claims.

## Claims

1. An adhesive tape for mounting flexographic printing plates, comprising: a substrate comprising a foam and having a first longitudinal side opposite a second longitudinal side, a first adhesive layer disposed on the first longitudinal side, and a second adhesive layer disposed on the second longitudinal side, wherein at least one of the first and second adhesive layers comprises a polymer component obtainable by free-radical polymerization of monomers comprising a), b) and c):

   a) 50 wt% or greater linear or branched acrylic esters selected from at least one of isooctyl acrylate, 2-ethylhexyl acrylate, n-butyl acrylate, ethyl acrylate, and combinations thereof,
   b) 22.5 wt% to 46.5 wt% isobornyl acrylate, and
   c) greater than 3.5 wt% to 27.5 wt% of acrylic acid,

   wherein the polymer component has a glass transition temperature value of between -22 °C and -7 °C according to the Fox method in accordance with the equation below:

$$\frac{1}{T_G} = \sum_n \frac{W_n}{T_{G,n}}$$

   ,

   wherein n represents the serial number of the monomers used, $W_n$ represents the mass fraction of the respective monomer n in % by weight, and $T_{g,n}$ represents the respective glass transition temperature of the homopolymer of each of the monomers n, in K based on measurement of the homopolymers of the monomers in (a), (b), and (c) by modulated DSC, and further wherein the polymer component has a solubility parameter between 9.58 $(cal/cm^3)^{1/2}$ (19.6 $(J/cm^3)^{1/2}$) and 9.99 $(cal/cm^3)^{1/2}$ (20.4 $(J/cm^3)^{1/2}$) according to the Fedors method as described in Fedors, Polym. Eng. and Sci., 14:147 (1974),
   wherein at least one of the adhesive layers having the polymer component has a peel force from residue coated plate of less than or equal to 5.47 Newtons per cm, as measured by the method Peel Adhesion: Residue Coated Printing Plate recited in the description.

2. The adhesive tape of claim 1 wherein the substrate comprises a foam layer.

3. The adhesive tape of claim 2 wherein the foam layer has density of 0.32 $g/cm^3$ (20 $lbs/ft^3$) or less.

4. The adhesive tape of any of the preceding claims further comprising a primer disposed between at least one of the longitudinal sides of the substrate and the adhesive layer having the polymer component comprised therein.

**5.** The adhesive tape of claim 4 wherein the primer is a crosslinked aliphatic urethane.

**6.** A tool comprising:

(a) a printing plate, wherein the printing plate comprises (i) a polyester backing surface, and (ii) a polyamide, nitrocellulose or polyurethane ink binder residue layer on at least a portion of the polyester backing surface,
(b) an adhesive tape according to any of the preceding claims, and
(c) a tool base,

wherein the first adhesive layer of the adhesive tape is in contact with the ink binder residue layer, and further wherein the second adhesive layer of the adhesive tape is in contact with the tool base.

**7.** A process for mounting printing plates comprising:

(a) providing an adhesive tape according to any of claims 1 to 5;
(b) applying the second adhesive layer of the adhesive tape to a tool base;
(c) mounting a clean printing plate on the first adhesive layer;
(d) placing the mounted tool base on a printing press;
(e) printing multiple images on the printing press with a printing ink containing polyamide, nitrocellulose or polyurethane ink binder(s);
(f) demounting the printing plate without damage to any of the adhesive tape layers or transfer of any of the adhesive tape layers to the printing plate or printing plate surface;
(g) cleaning ink residue from the printing plate; and
(h) repeating steps (a) through (g) at least one more time, wherein the printing plate used in step (c) is a previously used plate.

**Patentansprüche**

**1.** Ein Klebeband zum Befestigen von Flexodruckplatten, umfassend: ein Substrat, das einen Schaum umfasst und eine erste Längsseite gegenüber einer zweiten Längsseite aufweist, eine erste Klebstoffschicht, die auf der ersten Längsseite angeordnet ist, und eine zweite Klebstoffschicht, die auf der zweiten Längsseite angeordnet ist, wobei mindestens eine der ersten und zweiten Klebstoffschicht eine Polymerkomponente umfasst, die durch radikalische Polymerisation von Monomeren erhältlich ist, die a), b) und c) umfassen:

a) 50 Gew.-% oder mehr lineare oder verzweigte Acrylsäureester, ausgewählt aus mindestens einem von Isooctylacrylat, 2-Ethylhexylacrylat, n-Butylacrylat, Ethylacrylat und Kombinationen davon,
b) 22,5 bis 46,5 Gew.-% Isobornylacrylat, und
c) mehr als 3,5 Gew.-% bis 27,5 Gew.-% Acrylsäure,

wobei die Polymerkomponente einen Glasübergangstemperaturwert zwischen -22 °C und -7 °C gemäß dem Fox-Verfahren gemäß der folgenden Gleichung aufweist:

$$\frac{1}{T_G} = \sum_n \frac{W_n}{T_{G,n}}$$

wobei n für die laufende Nummer der eingesetzten Monomere steht, $W_n$ für den Massenanteil des jeweiligen Monomers n in Gew.-% steht, und $T_{g,n}$ für die jeweilige Glasübergangstemperatur des Homopolymers aus jedem der Monomere n steht, in K basierend auf der Messung der Homopolymere der Monomere in (a), (b) und (c) durch modulierte DSC, und wobei ferner die Polymerkomponente einen Löslichkeitsparameter zwischen 9,58 $(cal/cm^3)^{1/2}$ (19,6 $(J/cm^3)^{1/2}$) und 9,99 $(cal/cm^3)^{1/2}$ (20,4 $(J/cm^3)^{1/2}$) gemäß dem Fedors-Verfahren, wie in Fedors, Polym. Eng. and Sci., 14: 147 (1974) beschrieben, aufweist,
wobei mindestens eine der Klebstoffschichten, die die Polymerkomponente aufweist, eine Abziehkraft von der Rückstand beschichtete Platte von weniger als oder gleich 5,47 Newton pro cm aufweist, wie durch das Verfahren Abziehhaftung: mit Rückstand beschichtete Druckplatte, das in der Beschreibung aufgeführt ist, gemessen.

**2.** Das Klebeband nach Anspruch 1, wobei das Substrat eine Schaumschicht umfasst.

**3.** Das Klebeband nach Anspruch 2, wobei die Schaumschicht eine Dichte von 0,32 $g/cm^3$ (20 $lbs/ft^3$) oder weniger aufweist.

**4.** Das Klebeband nach einem der vorstehenden Ansprüche, ferner umfassend eine Grundierung, die zwischen mindestens einer der Längsseiten des Substrats und der Klebstoffschicht, in der die Polymerkomponente enthalten ist, angeordnet ist.

**5.** Das Klebeband nach Anspruch 4, wobei die Grundierung ein vernetztes aliphatisches Urethan ist.

**6.** Ein Werkzeug, umfassend:

(a) eine Druckplatte, wobei die Druckplatte (i) eine Polyester-Trägeroberfläche und (ii) eine Rückstandsschicht von Polyamid-, Nitrocellulose- oder Polyurethan-Tintenbindemittel auf mindestens einem Teil der Polyester-Trägeroberfläche umfasst,
(b) ein Klebeband nach einem der vorstehenden Ansprüche, und
(c) eine Werkzeugbasis,

wobei die erste Klebstoffschicht des Klebebands in Kontakt mit der Rückstandsschicht von Tintenbindemittel ist, und wobei ferner die zweite Klebstoffschicht des Klebebands in Kontakt mit der Werkzeugbasis ist.

**7.** Ein Verfahren zum Montieren von Druckplatten, umfassend:

(a) Bereitstellen eines Klebebands nach einem der Ansprüche 1 bis 5;
(b) Auftragen der zweiten Klebstoffschicht des Klebebands auf eine Werkzeugbasis;
(c) Montieren einer sauberen Druckplatte auf die erste Klebstoffschicht;
(d) Platzieren der montierten Werkzeugbasis auf eine Druckmaschine;
(e) Drucken mehrerer Bilder auf der Druckmaschine mit einer Drucktinte, die Polyamid-, Nitrocellulose- oder Polyurethan-Tintenbindemittel enthält;
(f) Demontieren der Druckplatte ohne Beschädigung einer der Klebebandschichten oder Übertragung einer der Klebebandschichten auf die Druckplatte oder Druckplattenoberfläche;
(g) Reinigen der Druckplatte von Tintenresten; und
(h) Wiederholen der Schritte (a) bis (g) mindestens ein weiteres Mal, wobei die in Schritt (c) verwendete Druckplatte eine zuvor verwendete Platte ist.

**Revendications**

**1.** Ruban adhésif pour le montage de plaques d'impression flexographique, comprenant : un substrat comprenant une mousse et ayant un premier côté longitudinal opposé à un deuxième côté longitudinal, une première couche adhésive disposée sur le premier côté longitudinal, et une deuxième couche adhésive disposée sur le deuxième côté longitudinal, dans lequel au moins une des première et deuxième couches adhésives comprend un composant polymère pouvant être obtenu par polymérisation radicalaire de monomères comprenant a), b) et c) :

a) 50 % en poids ou plus d'esters acryliques linéaires ou ramifiés choisis à partir d'au moins l'un parmi acrylate d'isooctyle, acrylate de 2-éthylhexyle, acrylate de n-butyle, acrylate d'éthyle, et des combinaisons de ceux-ci,
b) 22,5 % en poids à 46,5 % en poids d'acrylate d'isobornyle, et
c) plus de 3,5 % en poids à 27,5 % en poids d'acide acrylique,

dans lequel le composant polymère a une valeur de température de transition vitreuse comprise entre -22 °C et -7 °C selon le procédé de Fox conformément à l'équation ci-dessous :

$$\frac{1}{T_G} = \sum_n \frac{W_n}{T_{G,n}}$$

dans lequel n représente le numéro de série des monomères utilisés, $W_n$ représente la fraction massique du monomère respectif n en % en poids, et $T_{g,n}$ représente la température de transition vitreuse respective de l'homopolymère de chacun des monomères n, en K sur la base d'une mesure des homopolymères des monomères en (a), (b) et (c) par DSC modulée, et dans lequel en outre le composant polymère a un paramètre de solubilité entre 9,58 $(cal/cm^3)^{1/2}$ (19,6 $(J/cm^3)^{1/2}$) et 9,99 $(cal/cm^3)^{1/2}$ (20,4 $(J/cm^3)^{1/2}$) selon le procédé de Fedors tel que décrit dans Fedors, Polym. Eng. and Sci., 14 : 147 (1974),
dans lequel au moins une des couches adhésives ayant le composant polymère a une force de pelage à partir d'une plaque revêtue d'un résidu inférieure ou égale à 5,47 Newtons par cm, telle que mesurée par le procédé de Résistance au pelage : plaque d'impression revêtue d'un résidu cité dans la description.

**2.** Ruban adhésif selon la revendication 1 dans lequel le substrat comprend une couche de mousse.

**3.** Ruban adhésif selon la revendication 2 dans lequel la couche de mousse a une masse volumique de 0,32 $g/cm^3$ (20 livres/$pieds^3$) ou moins.

**4.** Ruban adhésif selon l'une quelconque des revendications précédentes comprenant en outre un apprêt disposé entre au moins un des côtés longitudinaux du substrat et la couche adhésive ayant le composant polymère, y compris.

**5.** Ruban adhésif selon la revendication 4 dans lequel l'apprêt est un uréthane aliphatique réticulé.

**6.** Outil comprenant :

(a) une plaque d'impression, dans lequel la plaque d'impression comprend (i) une surface de support en polyester, et (ii) une couche de résidu de liant d'encre de type polyamide, nitrocellulose ou polyuréthane sur au moins une partie de la surface de support en polyester,
(b) un ruban adhésif selon l'une quelconque des revendications précédentes, et
(c) une base d'outil,

dans lequel la première couche adhésive du ruban adhésif est en contact avec la couche de résidu de liant d'encre, et dans lequel en outre la deuxième couche adhésive du ruban adhésif est en contact avec la base d'outil.

**7.** Procédé de montage de plaques d'impression comprenant :

(a) la fourniture d'un ruban adhésif selon l'une quelconque des revendications 1 à 5 ;
(b) l'application de la deuxième couche adhésive du ruban adhésif à une base d'outil ;
(c) le montage d'une plaque d'impression propre sur la première couche adhésive ;
(d) la mise en place de la base d'outil montée sur une presse d'impression ;
(e) l'impression de multiples images sur la presse d'impression avec une encre d'impression contenant un ou des liant(s) d'encre de type polyamide, nitrocellulose ou polyuréthane ;
(f) le démontage de la plaque d'impression sans dommage à l'une quelconque des couches de ruban adhésif ou transfert de l'une quelconque des couches de ruban adhésif vers la plaque d'impression ou la surface de plaque d'impression ;
(g) le nettoyage d'un résidu d'encre de la plaque d'impression ; et
(h) la répétition des étapes (a) à (g) au moins une fois de plus, dans lequel la plaque d'impression utilisée à l'étape (c) est une plaque précédemment utilisée.

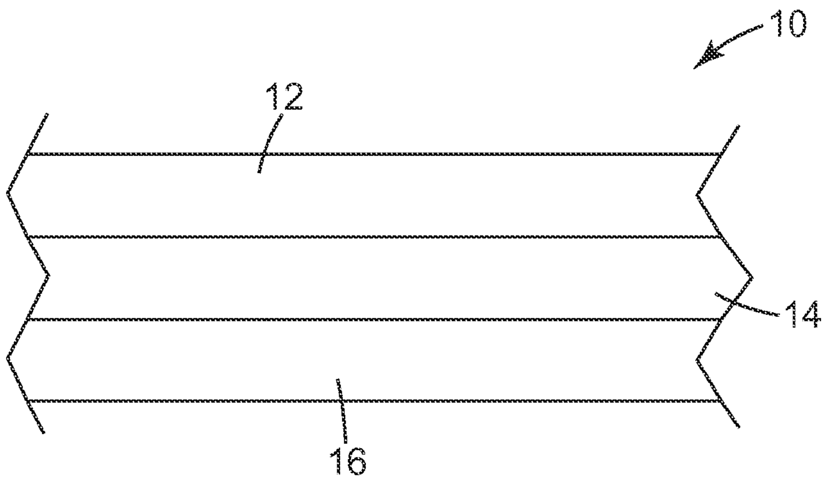


*Fig. 1*

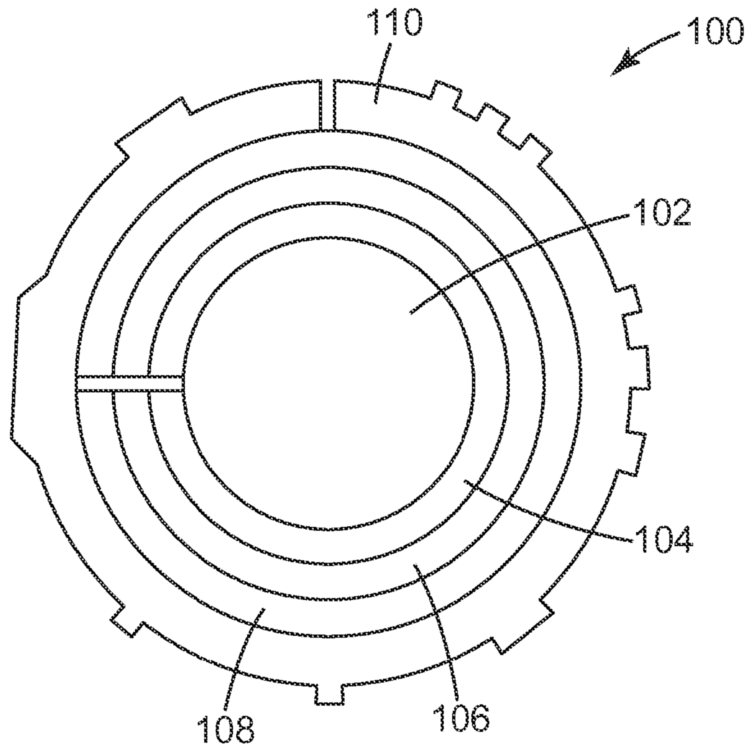


*Fig. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 760389 A
- WO 03057497 A
- US 5905099 A, Everaerts
- US 20060057366 A1, Husemann
- US 20080044611 A1, Husemann
- US 20110166311 A1, Ellringmann
- JP 2200476 A
- US 3578622 A, Brown
- JP J02200476 A
- US 4737559 A, Kellen
- US 5407971 A, Everaerts
- US 4379201 A, Heilmann
- US 4329384 A
- US 4330590 A, Vesley
- EP 1800865 A1, Kapfer


### Non-patent literature cited in the description


- Fedors method'' refers to the technique for calculating solubility parameter values described in Fedors. *Polym. Eng. and Sci.,* 1974, vol. 14, 147
- **T. G. FOX.** *Bull. Am. Phys. Soc.,* 1956, vol. 1, 123
- Corona treatment of films is a well-known technique. **CRAMM, R. H. ; BIBEE, D. V.** The Theory and Practice of Corona Treatment for Improving Adhesion. TAPPI, August 1982, vol. 65, 75-78
- Encyclopedia of Polymer Technology. Interscience Pub, 1966, vol. 4, 63-65
- **HOUBEN WEYL.** The production of C-centered radicals. *Methoden der Organischen Chemie,* vol. E 19a, 60-147
- **J.-P. FOUASSIER.** Photoinitiation, Photopolymerization and Photocuring, Fundamentals and Applications. Hanser Publishers, 1995
- Chemistry & Technology of UV & EB Formulation for Coatings, Inks & Paints. SITA Technology, 1994, vol. 5
- **DONATAS SATAS ; VAN NOSTRAND.** *Handbook of Pressure Sensitive Adhesive Technology,* 1989
- Electron Beam Processing. **SKELHORNE.** Chemistry & Technology of UV & EB Formulations for Coatings, Inks & Paints. Sita Technology, 1991, vol. 1
- *Bull. Chem. Soc. Japan,* 1969, vol. 42, 2924